(19) Europäisches Patentamt
European Patent Office
Office européen des brevets

(11) EP 0 599 676 B1

(12) # FASCICULE DE BREVET EUROPEEN

(45) Date de publication et mention de la délivrance du brevet: **22.01.1997 Bulletin 1997/04**

(51) Int Cl.[6]: **C08F 220/30**, C08F 220/58, C09D 125/14, C09D 133/06

(21) Numéro de dépôt: **93402656.8**

(22) Date de dépôt: **29.10.1993**

(54) **Liant pour peinture à base de latex**

Bindemittel für Latexfarbe

Binder for latex paint

(84) Etats contractants désignés:
**AT BE CH DE DK ES FR GB GR IE IT LI LU NL PT SE**

(30) Priorité: **04.11.1992 FR 9213196**

(43) Date de publication de la demande:
**01.06.1994 Bulletin 1994/22**

(73) Titulaire: **RHONE-POULENC CHIMIE**
**92408 Courbevoie Cédex (FR)**

(72) Inventeur: **Reeb, Roland**
**F-77410 Gressy (FR)**

(74) Mandataire: **Seugnet, Jean Louis et al**
**RHONE-POULENC CHIMIE,**
**Direction de la Propriété Industrielle,**
**25, Quai Paul Doumer**
**92408 Courbevoie Cédex (FR)**

(56) Documents cités:
**LU-A- 43 285**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 599 676 B1

## Description

La présente invention concerne un liant pour peinture ou revêtement semi-épais souple, en particulier pour façade d'immeuble, à base de latex acrylique ou styrène/acrylate contenant une benzophénone, ladite peinture étant plus particulièrement utilisable en extérieur. Par revêtement souple semi-épais, on entend selon l'invention un produit d'enduction ayant une consistance similaire à celle d'un mastic.

On sait faire depuis longtemps des peintures pour l'intérieur faciles à appliquer de faible niveau d'odeur et faciles à nettoyer dont le polymère organique constitutif du liant latex est du type "dur" c'est-à-dire qu'il présente une température de transition vitreuse (Tg) supérieure à 0°C. De telles peintures appliquées à l'extérieur ne se salissent pas à la poussière et présentent une surface non collante satisfaisante. Cependant, elles présentent une adhésion médiocre au support et possèdent une mauvaise résistance à la fissuration.

Or les peintures acryliques du type ci-dessus sont appliquées sur la surface extérieure des immeubles en vue de constituer un enduit protecteur efficace contre l'infiltration de l'eau de pluie grâce à leur aptitude au pontage des fissures ou microfissures du support présentes, et à venir. L'enduit élastomère doit donc nécessairement, présenter des possibilités de déformations élevées sans apparition de déchirure (résistance à la fissuration) ou de décollement (adhésion) de l'enduit dans une large gamme de température. En plus de son rôle protecteur contre les intempéries, l'enduit a un rôle esthétique important qui est évalué par la résistance à la salissure, cette salissure provenant essentiellement de la captation et de l'incrustation de poussières à la surface d'un enduit trop mou et à la propriété de collant en surface trop élevée. La résistance à la salissure de l'enduit est donc également un autre critère très important à prendre en considération pour apprécier la qualité de la peinture acrylique pour extérieur.

On a donc pensé à appliquer à l'extérieur des peintures acryliques dont le polymère organique constitutif du liant latex est du type "mou" (Tg inférieur à 0 °C, de préférence inférieure à - 10 °C) et on obtient alors une adhésion et une résistance à la fissuration correctes, cependant la résistance à la salissure et la propriété de collant en surface ne sont pas satisfaisantes.Une première solution technique à ce problème a été fournie par l'enseignement de US-A 3.320.198 visant une peinture pour extérieur à base d'un latex aqueux de polymère acrylique comportant de 0,3 à 10 % de préférence 0,5 à 3 % en poids par rapport au poids du polymère, de benzophénone.

US 3.320.198 a fait faire un bond en avant à l'état de la technique pour la résolution du problème indiqué ci-dessus mais nécessite, pour être vraiment efficace, d'utiliser des quantités importantes de benzophénone .

Par ailleurs, la benzophénone ou ses dérivés sont souvent des produits solides à température ambiante, ce qui nécessite de les ajouter dans le latex sous la forme d'une solution dans un solvant organique tel que le toluène et le xylène ou sous la forme d'une émulsion aqueuse..

Tous ces produits organiques (benzophénone et solvants) ont une tension de vapeur non négligeable, ce qui confère au latex une odeur détectable qui peut incommoder l'applicateur de la peinture. En outre, les contraintes écologiques actuelles poussent à ne pas utiliser de solvants organiques.

EP-A 010 000 décrit une solution similaire à celle objet de US-A 3.320.198. Cependant, en vue d'améliorer l'efficacité de la benzophénone et donc pour diminuer les quantités utilisées, EP-A 010 000 enseigne l'utilisation d'un polymère porteur de radicaux durcissables par oxydation à l'air, à savoir des groupes alcényles portés par des groupements amides ou esters.

Les peintures ainsi obtenues ont des propriétés anti-salissures et d'adhésion encore insuffisantes et la benzophénone doit toujours être introduite sous la forme d'une solution dans un solvant organique.

Le but de la présente invention est précisément de proposer un latex aqueux de polymère acrylique ou styrène/acrylate utilisable comme liant pour peinture ou revêtement souple semi-épais, plus particulièrement pour peinture extérieure, pouvant être exempt de solvant organique et conférant à la peinture une fois étalée et séchée, une bonne souplesse même à une témpérature ambiante de - 10°C, limite basse d'utilisation imposée par le marché, une bonne adhésion au support, combinées à une bonne résistance à la salissure.Ce but et d'autres est atteint par la présente invention qui concerne en effet un liant pour peinture acrylique ou styrène/acrylate, plus particulièrement pour peinture extérieure ou revêtement souple semi-épais, caractérisé en ce qu'il est à base d'un polymère acrylique de Tg < 0°C issu de la polymérisation d'un mélange de monomères comportant :

a) au moins un monomère carboxylique monooléfinique, alpha-beta insaturé,
b) au moins un ester d'acide (méth)acrylique d'un alcool primaire ou secondaire ayant de 1 à 18 atomes de carbone,
c) 0.01 à 3 % en poids par rapport au poids total des monomères d'un monomère de formule (1):

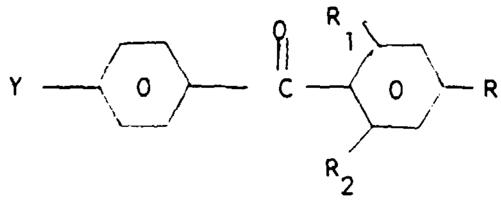

(1)

dans laquelle les radicaux R, $R_1$ et $R_2$ identiques à différentes sont choisis parmi H, $CH_3$, Cl, OH, $NH_2$, COOH et $COOCH_3$ et Y est un radical hydrocarboné organique porteur d'une insaturation alpha-béta oléfinique copolymérisable avec a) et b) et pouvant comporter en outre au moins un hétéroatome choisi parmi O, N et S, ledit monomère de formule (1) présentant une masse moléculaire inférieure à 600, de préférence inférieure à 400.

Dans tout ce qui suit ou ce qui précède, sauf indications contraires, les parties et pourcentages sont en poids. Par ailleurs l'expression (méth)acrylique et (méth)acrylate veut dire méthacrylique et/ou acrylique, méthacrylate et/ou acrylate.

Plus particulièrement le monomère c) répond à la formule (2) :

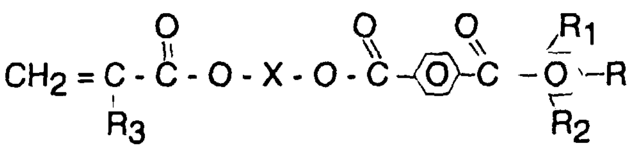

(2)

dans laquelle :

- R, $R_1$ et $R_2$ ont la même signification que celle donnée à la formule (1) ci-dessus, de préférence $R_1 = R_2 =$ H et R = Cl.
- $R_3$ est choisi parmi H et $CH_3$.
- X est un radical hydrocarboné divalent linéaire ou ramifié contenant de 1 à 6 atomes de carbone et éventuellement un atome d'oxygène.

Comme exemples de groupes X, on peut citer plus particulièrement ceux de formule :

$$-CH_2-$$

$$-(CH_2)_2-$$

$$-(CH_2)_3-$$

$$-CH(CH_3)-CH_2-$$

$$-CH_2-CH(OH)-CH_2-$$

$$-CH(CH_2OH)-CH_2-$$

Un produit de formule (2) plus particulièrement utilisable est l'UVECRYL P 36 commercialisé par la Société Radcure Specialities S.A. Anderlecht, Belgique et répondant à la formule (3) ci-dessous et ayant comme numéro d'enregistrement au Chemical Abstracts RN = 85340-63-2 :

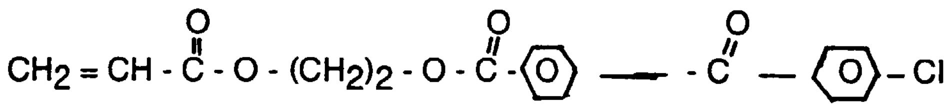

(3)

Formule (2) $R_1 = R_2 = R_3 = H$

$R = Cl$

$X = -(CH_2)-_2$

Les monomères de formule (1) ou (2) sont des produits connus ou à tout le moins des produits faciles à synthétiser par réaction d'un dérivé approprié de la benzophénone sur un composé organique à insaturation éthylénique donnant, après réaction, le radical Y.

Comme autre exemples de monomères utilisables, on peut citer les monomères de formule :

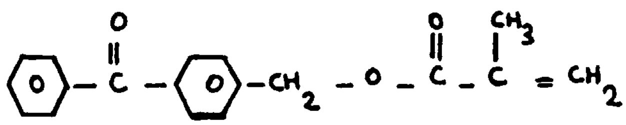

(FR-A-1 557 563)

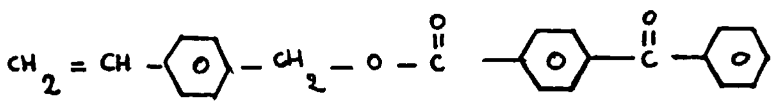

(DE-A-2 818 763)

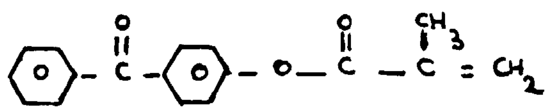

(US-A-3 214 492)

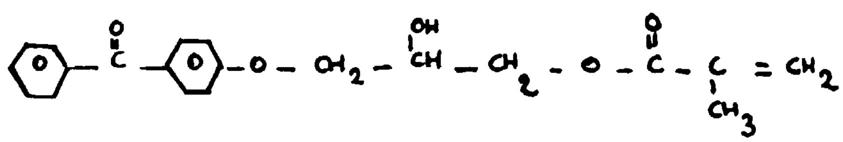

(US-A-3 429 852)

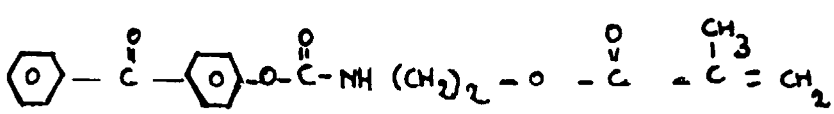

(EP-A-346 788)

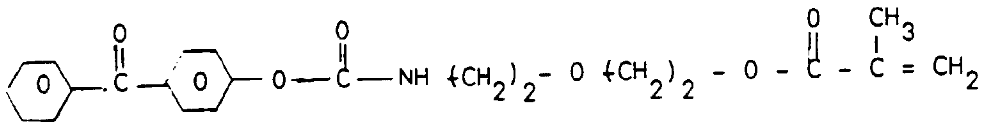

(DE-A-4 007 318)

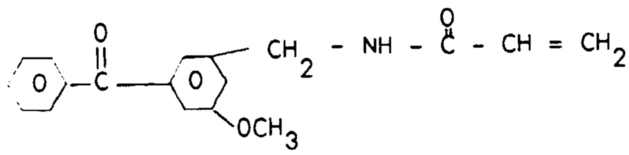

(EP-A-458 164)
et les para-acryloxybenzophenones décrits dans EP-A-246 848.

Par quantité efficace de monomère c), on entend une quantité qui permet d'aboutir au but visé par la présente invention en ce qui concerne plus particulièrement les propriétés anti-salissure et de résistance à la fissuration. Les quantités de monomère c) à utiliser sont en fait très faibles et toujours inférieures, toutes choses égales par ailleurs, à celles qu'il serait nécessaire d'utiliser en suivant l'enseignement de US 3.320.198 et EP-A 010 000 précités. Pour fixer les idées, on recommande selon l'invention d'utiliser de 0,01 à 3 %, de préférence de 0,05 à 2 %, en poids de monomère c) par rapport au poids total de monomères.Des quantités de monomères c) comprises entre 0,1 et 1 % en poids conviennent généralement. Ces quantités sont en réalité faibles car seulement une partie de la molécule du monomère c) est actiniquement active.

Comme mélange de momères utilisables pour faire le polymère organique du latex, on peut utiliser n'importe quel mélange à partir du moment où, d'une part il comporte les monomères a), b) et c) présents de préférence suivant une teneur d'au moins 80 % en poids par rapport aux monomères et, d'autre part le copolymère obtenu présente une Tg inférieure à 0°C, de préférence inférieure à - 10°C. La Tg du polymère peut être calculée en suivant la méthode décrite par Fox, Bull Am. Physics Soc. A, 3 page 123 (1956) où elle peut être mesurée par exemple en suivant la méthode de Brandrup et Immergat décrite dans "Polymer Handbook" Sec. III, pp. 61-63, Interscience (1966).

Des mélanges de monomères utilisables sont en particulier décrits dans US-A 3.320.198 et EP-A 010 000 cités comme référence.

Comme exemple préféré de mélange de monomères, on peut citer ceux comportant essentiellement :

a) de 1 à 6, de préférence de 2 à 4 % en poids d' au moins un acide carboxylique à insaturation alpha-béta éthylénique tel que l'acide (meth)acrylique, maléique, fumarique et itaconique.
b) de 55 à 95 % en poids de monomères esters de l'acide (meth)acrylique dont la partie alkyle présente de 1 à 8 atomes de carbones, comportant à la fois des monomères "durs" et "mous".
c) de 0,01 à 3 % en poids de dérivé de benzophénone de formule (1).
d) de 0 à 40, de préférence de 5 à 20 % en poids de styrène.

Comme monomère acrylique "mou", on peut citer la plupart des esters d'alkyle de l'acide (méth)acrylique dont le radical alkylé présente de 1 à 18 atomes de carbone notamment le (méth)acrylate d'éthyl-2 hexyle, le méthacrylate d'isooctyle, l'acrylate de n-butyle, l'acrylate de n-octyle.Comme monomère acrylique "dur", on peut citer les méthacrylates d'alkyle ayant de 1 à 4 atomes de carbone tel que le méthacrylate de méthyle.

Tout ou partie des monomères acryliques "dur" peut être remplacé par un monomère vinylaromatique tel le styrène et la peinture est alors appelée peinture styrène/acrylate.

Il est recommandé que le mélange de monomères comporte en outre de petites quantités généralement inférieures à 2 % en poids et supérieures à 0,1 % en poids par rapport au poids total des monomères d'au moins un monomère à insaturation éthylénique choisi parmi :

- les sulfates et sulfonates d'un métal alcalino-terreux tel que le métallylsulfonate de sodium, le sulfoéthyl(méth) acrylate de sodium le 2-acrylamido 2-méthylpropane sulfonate de sodium, le styrène sulfonate de sodium et le

vinylsulfonate de sodium.

- les amides d'acide carboxylique à insaturationt alpha-béta éthylénique, en particulier l'acrylamide, le N-hydroxyéthyl-acrylamide, le N-méthylolacrylamide et le N-(diméthylaminoéthyl)acrylamide.

Selon une variante préférée de l'invention, le polymère constitutif du latex comporte en outre un radical oxydable à l'oxygène de l'air et qui confère au molymère la propriété de durcir (réticuler) à l'oxygène de l'air.

Ces radicaux peuvent être des radicaux alcènes aliphatiques insaturés ayant au plus 18 atomes de carbone et portés par des groupes esters et amides tels que décrits par EP-A 010 000 cité comme référence. Ces radicaux sont introduits dans la chaîne polymère par réaction de l'hydroxamide ou de l'ester glycidyle de l'acide gras insaturé correspondant sur les groupes carboxyle libre du squelette du polymère, issus du monomère acide carboxylique insaturé. Une autre solution peut consister à copolymériser des (méth)acrylates de chaînes grasses insaturées tels que l'acrylate de linolényle comme enseigné par Fung-Bor Chen et al. Journal of Applied Polymer Science, Vol. 30, 4551-4582 (1985). Une autre solution peut consister à copolymériser des fonctions allyles tels que le (méth)acrylate d'allyle ou le diallyle phtalate comme décrit dans EP-A 297 781.

Conformément à l'invention, le radical oxydable à l'air préféré est le radical dicyclopentadiényle qui est introduit dans le polymère en utilisant de 1 à 10 % de préférence de 3 à 6 % en poids, par rapport au poids total de monomères, d'au moins un monomère dicyclopentadiènyle de formule :

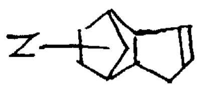

(4)

dans laquelle Z est un radical hydrocarboné organique porteur d'une insaturation alpha-béta oléfinique copolymérisable avec les monomères a), b) et c) et pouvant comporter en outre au moins un hétéroatome choisi parmi O, N et S ledit monomère de formule (4) présentant une masse moléculaire inférieure à 600, de préférence inférieure à 400.

Comme exemple de monomères de formule (4), on peut citer le dicyclopentadiényl(méth)acrylate, commercialisé par la société dénommée anciennement Alcolac et maintenant Rhône - Poulenc Inc., conformément à l'enseignement de US-A 4.144.212 cité comme référence, ainsi que le dicyclopentadiènyloxyéthylméthacrylate commercialisé par la société Elf-Atochem. D'autres exemples pourront être trouvés dans GB-A-1 600 628, US-A-4 145 503, EP-A-355 032, DD-A 256 803 et EP-A-167 902 cités comme référence.

Le mélange de monomère peut aussi comporter de petites quantités (généralement jusqu'à 1 % en poids) d'agent réticulant tel qu'un diester (meth)acrylique d'un diol comme par exemple le diméthacrylate d'éthylène glycol. Le mélange de monomère est ensuite polymérisé par polymérisation radicalaire en émulsion aqueuse.

Cette polymérisation en émulsion est réalisée de manière connùe en soi en une ou plusieurs étapes.

On utilise notamment un initiateur de polymérisation de type radicalaire générateur de radicaux libres tel que le persulfate d'ammonium pouvant être utilisé seul ou en combinaison avec un accélérateur tel que du métabisulfite ou thiosulfate de sodium, du formaldéhyde sulfoxylate de sodium ainsi que des ions métallique (fer, cobalt, cuivre). D'autres amorceurs tel l'eau oxygénée ou l'hydroxperoxyde de tertio-butyl peuvent être utilisés en association avec un réducteur.

L'initiateur et l'accélérateur, constituant conjointement ce qui est habituellement dénommé catalyseur, sont utilisables à raison généralement de 0,1 à 2 % chacun sur la base du poids de monomères à copolymériser. La température de polymérisation peut être comprise entre 30°C et 100°C, de préférence entre 50°C et 90°C.

Comme exemples d'agents émulsifiants, on peut citer des sels de métal alcalin et d'ammonium d'alkyl-, aryl-, alkylaryl- et aryalkylsulfonates et sulfates, ou de polyéther-sulfate ; les phosphates et phosphonates correspondants ; et des acides gras, esters, alcools, amines, amides et alkylphénols éthoxylés. De manière connue, il est possible de polymériser un monomère ou une partie des monomères, dans une première étape, puis d'y ajouter les autres monomères de manière à former des particules hétérogènes.

C'est ainsi qu'une partie ou la totalité des monomères à base d'acide carboxylique insaturé peut être ajoutée en continu ou par fraction après le départ de la polymérisation afin d'assurer qu'une quantité suffisante de groupes acides se situe à la surface des particules de polymère formées au cours de la polymérisation.

La teneur en matières sèches du latex est généralement comprise entre 20 et 70 % de préférence 40-60 % en poids, avec un diamètre de particules de polymère compris entre 0,05 et 0,5 µm.

Après polymérisation, les latex carboxylés sont habituellement ajustés à un pH neutre ou basique à l'aide d'une ou plusieurs bases tels que les hydroxydes alcalins, l'ammoniaque ou des amines organiques hydrosolubles comme la 2-amino méthy-2 propanol, le diéthylaminoéthanol;

Pour faire la peinture acrylique ou styrène/acrylate, on mélange de façon connue le liant latex caboxylé de préférence ainsi neutralisé à une dispersion pigmentaire contenant des adjuvants usuels ainsi que des pigments et des matières de charge pulvérulentes comme adjuvants usuels, on utilise notamment des agents dispersants tels que des polyacrylates alcalins, des agents épaississants tels que des polyuréthannes hydrosolubles non ioniques, éventuellement des agents de coalescence tels que l'éther monobutylique de l'éthylène glycol, des agents anti-mousses telle qu'une huile polydiméthylsiloxane, des agents anti-gels tels que l'éthylèneglycol.

Le pigment le plus courant est le dioxyde de titane (rutile ou anatase). Les charges pulvérulentes usuelles sont le carbonate de calcium, la silice, le talc, et le sulfate de calcium.

La peinture présente une concentration pigmentaire en volume (CPV) comprise de préférence entre 10 et 40 % et une teneur totale en extraits secs comprise entre 25 et 75 % en poids, de préférence entre 35 et 65 %. Ce sont les revêtements souples semi-épais qui ont les extraits secs les plus élevés, généralement supérieurs à 50 %.

La peinture selon l'invention peut être appliquée sur les surfaces externes des immeubles par tout moyen convenable tel que pinceau, brosse, rouleau, pulvérisateur à air, etc...

La peinture est applicable sur des supports en matière diverse notamment en métal tel que l'aluminium, en bois, en ciment, en briques avec ou sans enduction préalable par un primaire d'adhérence.

La pellicule de peinture ainsi déposée et exposée quelques jours au soleil présente à sa surface une très mince couche dure anti-salissure qui ne capte pas les poussières. La formation de cette très mince couche anti-salissure peut être favorisée par irradiation au moyen d'une lampe de lumière actinique dont la radiation a une longueur d'onde comprise entre 200 et 700, de préférence entre 280 et 400 millimicrons. La pellicule de peinture, dans sa plus grande épaisseur en contact avec le support n'est par contre, pas durcie et conserve ses propriétés de résistance à la fissuration et d'adhérence (allongement à la rupture inchangé).

L'exemple suivant illustre l'invention sans en limiter la portée.

**EXEMPLE**

a) *Préparation du latex de référence Lo (sans benzophénone)*

Dans un réacteur de 25 litres en acier inoxydable, muni d'une agitation et d'une double enveloppe à circulation d'eau permettant de régler la température à 80°C à l'intérieur du réacteur durant la polymérisaiton, on introduit les monomères suivants :

- 83 parties en poids d'eau,
- 9 parties en poids de styrène,
- 75,5 parties en poids d'acrylate de butyle,
- 10 parties en pods d'acrylate d'éthyl-2 hexyle,
- 0,5 parties en poids de diméthacrylate d'éthylèneglycol,
- 4 parties en poids d'acrylate de dicyclopentadiényle,
- 2,7 parties en poids d'acide acrylique,
- 0,5 partie en poids d'acrylamide,
- 0,5 partie en poids de sulfoéthylméthacrylate de sodium,
- 0,1 partie en poids d'alkylsulfonate de sodium,
- 1,6 partie en poids de persulfate d'ammonium.

On effectue la polymérisation à 80°C pendant 10 h.

En fin de polymérisation, on règle le pH du latex par addition d'environ 1,9 parties d'ammoniaque à 20 % et de 3 parties environ d'amino-2 méthyl-2 propanol en solution aqueuse à 50 %.

Le latex neutralisé Lo a une granulométrie moyenne de 0,15 µm, une Tg de - 40°C, un extrait sec de 53,3 %, un pH de 8 et une viscosité Brookfield mesurée à 50 t/mn de 3320 mPa.s.

- Préparation du latex L'o:

On procèce exactement comme dans le cas de Lo, sauf qu'on remplace les 4 parties d'acrylate de dicyclopentadiényle par 4 parties de styrène.(Granulométrie = 0,16 µm, Tg = - 39 °C, viscosité Brookfield = 3500mPa.s., extrait sec 53,6 %).

b) *Préparation des latex conformes à l'invention $L_1$ à $L_5$* :

- Préparation de $L_1$ :

On procède exactement selon le mode opératoire prévu pour Lo sauf que l'on n'utilise pas de diméthacrylate d'éthylène glycol et qu'on ajoute 1 partie en poids d'UVECRYL P 36 soit 0,9 % par rapport au polymère.

Le latex neutralisé $L_1$ a une granulométrie moyenne de 0,16 µm, une Tg de - 39°C, un extrait sec de 53,5 %, un pH de 8 et une viscosité Brookfield de 3150 mPa.s.

- Préparation de $L_2$ :

On procède exactement selon le mode opératoire prévu pour Lo sauf qu'on ajoute 0,5 partie d'UVECRYL P 36 soit 0,48 % par rapport au polymère.

Le latex neutralisé $L_2$ a une granulométrie moyenne de 0,16 µm, une Tg de - 40°C, un extrait sec de 53,5 %, un pH de 8 et une viscosité Brookfield de 3200 mPa.s.

- Préparation de $L_3$ :

On procède exactement selon le mode opératoire prévu pour Lo sauf qu'on ajoute 1 partie d'UVECRYL P 36 soit 0,96 % par rapport au polymère.

Le latex neutralisé $L_3$ a une granulométrie de 0,15 µm, une Tg de - 39°C, un extrait sec de 53,5 %, un pH de 8 et une viscosité Brookfield de 3080 mPa.s.

-Préparation de $L_4$ :

On procède selon le mode opératoire prévu pour Lo sauf qu'on remplace les 4 parties d'acrylate de dicyclopentadiényle par 4 parties d'oxyéthylméthacrylate de dicyclopentadiényle commercialisé par la société Atochem sous le nom commercial DCPOEMA.Les caractéristiques de $L_4$ sont: 0,16 µm, - 40 °C, 53,4% ,3260 mPa.s.

-Préparation de $L_5$ :

On procède selon le mode opératoire de Lo sauf qu'on utilise 8 parties de styrène et 5 parties de méthacrylate de dicyclopentadiényle à la place des 4 parties d'acrylate de dicyclopentadiényle. Les caractéristiques de L5 sont: 0,16 µm , - 39 °C , 53,1 % , 3000 mPa.s.

c) *Préparation des peintures Po à $P_5$* :

Dans un disperseur pour peinture où se trouve le liant L on ajoute les adjuvants, pigments et matières pulvérulentes en vue de réaliser une peinture permettant de déposer un enduit semi-épais d'imperméabilisation de composition suivante :

| | |
|---|---|
| Latex L | 674,5 parties en poids, |
| Hexaméthaphosphate de sodium (10 %) | 2,95 parties en poids, |
| Dispersant COATEX P 90 (polymère acrylique) | 1,40 parties en poids, |
| Biocide PROXEL GXL (ICI) | 0,70 parties en poids, |
| Propylène glycol | 10,40 parties en poids, |
| Antimousse NOPCO 8034 (Henkel Nopco) | 0,70 parties en poids, |
| Ammoniaque | 1,07 parties en poids, |
| Oxide de titane RL 68 (Thann et Mulhouse) | 99,90 parties en poids, |
| Carbonate de calcium DURCAL 5 (omya) | 71,77 parties en poids, |
| Carbonate de calcium DURCAL 15 (omya) | 71,77 parties en poids, |
| Talc Oxo (Talc de Luzenac) | 40,00 parties en poids, |
| Antimousse NOPCO 8034 (Henkel Nopco) | 0,70 parties en poids, |
| Epaissisant acrylique VISCOATEX 46 (10 %) | 3,84 parties en poids, |
| Epaissisant COATEX BR 100 (10 %) | 19,00 parties en poids, |
| Ammoniaque (20 %) | 1,35 parties en poids. |

On obtient ainsi la peinture de comparaison Po à partir du latex L = Lo et la peinture de comparaison P'o à partir de L'o contenant en outre 0,50 % en poids de benzophénone par rapport au poids de polymère et introduite sous forme de solution dans le toluène. Les peintures selon l'invention $P_1$ à $P_5$ sont obtenues à partir des liants L = $L_1$ à $L_5$. Par ailleurs on obtient la peinture P"o identique à P'o sauf que P"o ne comporte pas de benzophénone.

d) *Mesure de la résistance à la salissure*:

On enduit un substrat à l'aide des peintures Po, P'o, P"o et $P_1$ à $P_5$ au moyen d'un applicateur Erichsen® modèle 509/1 en vue d'obtenir une pellicule de peinture de 325 µm d'épaisseur.

Le substrat est une feuille de carbone recouverte d'aluminium. On laisse sécher la feuille pendant 48 heures à 23°C sous une humidité relative de 50 %. On découpe dans cette feuille des éprouvettes rectangulaires (160 mm x 240 mm) que l'on expose pendant 166 heures dans un Weather-O-Meter (WOM) de la Société ATLAS en travaillant dans une atmosphère sèche et en utilisant une lampe d'arc de Xénon de 5000 Watts munis de filtres pyrex conférant à la lampe un spectre d'émission proche du spectre de rayonnement solaire.

L'importance de la réticulation consécutive à l'irradiation est évaluée par la plus ou moins grande aptitude de la pellicule de peinture à fixer des poussières d'oxyde de fer noir (303 T/BAYER).

Les éprouvettes irradiées sont badigeonnées avec de l'oxyde de fer à l'aide d'une brosse plate. Elles sont ensuite essuyées à l'aide d'un papier souple (type papier Joseph) jusqu'à l'absence totale de transfert de pigment sur le papier.

Le niveau de salissure est apprécié d'après la mesure de la luminescence LU à l'aide d'un colorimètre-brillancemètre BYK Color-Gloss. Le résultat final est la moyenne de 10 lectures.

Plus la valeur exprimée en pourcentage est élevée, meilleure est la résistance à la salissure du revêtement.

Les résultats obtenus sont rassemblés dans le tableau 1 ci-après, où on a reporté les luminescentes mesurées sur les différents enduits avant et après exposition au WOM, mais également après salissure du film à l'oxyde de fer. La résistance de l'enduit à la salissure est d'autant meilleure que la perte de luminance constatée avant et après salissure est faible.

TABLEAU 1

| Référence peinture | Luminance $LU_o$ avant WOM avant salissure % | Luminance $LU_1$ après WOM avant salissure % | Luminance $LU_2$ après WOM après salissure % | Perte de luminance (salissure) $LU_2$ - $LU_1$ |
|---|---|---|---|---|
| Po | 97,14 ± 0,07 | 96,62 ± 0,15 | 40,62 ± 0,81 | 56 |
| P'o | 97,06 ± 0,08 | 96,44 ± 0,11 | 41,94 ± 0,65 | 54,5 |
| P"o | 97,18 ± 0,07 | 96,54 ± 0,15 | 39,48 ± 0,72 | 57,06 |
| $P_1$ | 97,21 ± 0,07 | 96,62 ± 0,27 | 54,75 ± 0,98 | 41,87 |
| $P_2$ | 97,29 ± 0,13 | 96,52 ± 0,14 | 47,35 ± 0,57 | 49,17 |
| $P_3$ | 97,44 ± 0,1 | 96,73 ± 0,12 | 53,35 ± 0,9 | 43,88 |
| $P_4$ | 97,32 ± 0,08 | 96,60 ± 0,20 | 52,55 ± 0,70 | 44,05 |
| $P_5$ | 97,30 ± 0,09 | 96,58 ± 0,15 | 49,10 ± 0,68 | 47,48 |

Du tableau 1, il apparaît que les enduits PO et P"o ne contenant pas de photoamorceur est celui qui est le plus salissant après exposition au WOM (166 heures). La résistance à la salissure est d'autant meilleure que la quantité de photoamorceur incorporé dans le polymère est importante.

A quantité molaire de photoamorceur benzophénone équivalente, ce qui est le cas des peintures P'o et $P_2$, on constate que l'UVECRYL P36 de $P_2$ est significativement plus réactif que la benzophénone du point de vue réticulation superficielle de l'enduit lors de l'exposition au WOM.

Les résultats ci-dessus sont observés quelque soit le type de monomère utilisé contenant le groupe dicyclopentadiènyle.

On obtient des résultats similaires en exposant à la salissure naturelle pendant 6 mois, à l'extérieur des éprouvettes enduites des mêmes peintures exposées au sud suivant une inclinaison de 45°.

## Revendications

1. Liant pour peinture acrylique ou styrène/acrylate, plus particulièrement pour peinture extérieure ou revêtement souple semi-épais, caractérisé en ce qu'il est à base d'un latex d'un polymère acrylique ou styrène/acrylate présentant une température de transition vitreuse inférieure à 0°C issu de la polymérisation d'un mélange de monomères comportant :

   a) au moins un monomère carboxylique monooléfinique alpha-béta insaturé.

b) au moins un ester d'acide (méth)acrylique d'un alcool primaire ou secondaire ayant de 1 à 18 atomes de carbone.

c) 0,01 à 3 % en poids par rapport au poids total des monomères d'un monomère de formule (1):

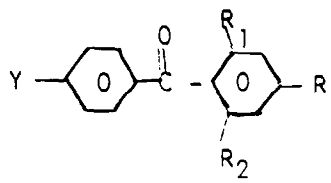

(1)

dans laquelle les radicaux R, $R_1$ et $R_2$ identiques ou différents sont choisis parmi H, $CH_3$, Cl, OH, $NH_2$, COOH et $COOCH_3$ et Y est un radical hydrocarboné organique présentant une insaturation alpha-béta oléfnique copolymérisable avec les monomères a) et b) et pouvant comporter en outre au moins un hétéroatome choisi parmi O, N et S ; ledit monomère de formule (1) présentant une masse moléculaire inférieure à 600, de préférence inférieure à 400.

**2.** Liant selon la revendication 1, caractérisé en ce que le monomère c) répond à la formule générale (2) :

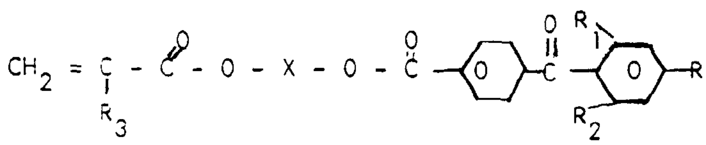

(2)

dans laquelle :

- R, $R_1$ et $R_2$ ont la même signification que celle donnée à la formule (1),
- $R_3$ est choisi parmi H et $CH_3$,
- X est un radical hydrocarboné divalent linéaire ou ramifié contenant de 1 à 6 atomes de carbone et éventuellement un atome d'oxygène.

**3.** Liant selon la revendication 1 ou 2, caractérisé en ce que le monomère c) répond à la formule (3):

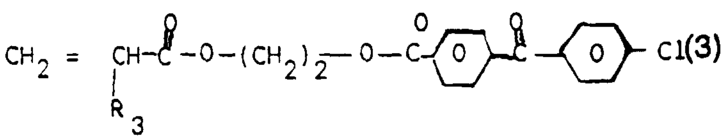

(3)

**4.** Liant selon l'une quelconques des revendications précédente caractérisé en ce qu'on utilise de 0,5 à 2 %, de préférence de 0,1 à 1% en poid de monomère c) par rapport au poids total des monomères.

**5.** Liant selon l'une quelconque des revendications 1 à 4, caractérisé en ce que le polymère comporte en outre un radical oxydable à l'oxygène de l'air.

**6.** Liant selon la revendication 5, caractérisé en ce que le radical oxydable à l'air est apporté par le monomère de formule (4) :

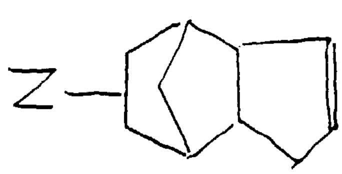

dans laquelle le radical Z représente un radical organique hydrocarboné comportant une insaturation alpha-bêta oléfinique copolymérisable avec les autres monomères et pouvant comporter au moins un hétéroatome choisi parmi O, N et S, ledit monomère ayant une masse moléculaire inférieure à 600 de préférence inférieure à 400.

**7.** Liant selon la revendication 6, caractérisé en ce que le polymère est issu d'un mélange de monomères comportant essentiellement :

a) de 1 à 6 % d'au moins un acide carboxylique à insaturation alpha-béta éthylénique.
b) de 55 à 95 % en poids d'esters de l'acide (meth)acrylique dont la partie alkyle présente de 1 à 8 atomes de carbone.
c) de 0,01 à 3 % en poids de dérivé de benzophénone de formule (2),
d) de 0 à 40 % en poids de styrène,
e) de 1 à 10 % en poids d'un produit choisi parmi le dicyclopentadiényl oxyéthyl(meth)acrylate.

**8.** Peinture styrène/acrylate, revêtement épais comportant des pigments. des charges pulvérulentes et des adjuvants usuels caractérisée en ce qu'elle comporte un liant tel que défini à l'une quelconque des revendications 1 à 7.

**Patentansprüche**

**1.** Bindemittel für Acryl- oder Styrol/Acrylat-Farbe, insbesondere für Außenfarbe oder eine weiche, halbpastige Beschichtung, dadurch gekennzeichnet, daß es auf Basis eines Acryl- oder Styrol/Acrylat-Polymerlatex mit einer Glasübergangstemperatur von weniger als 0 °C vorliegt, der aus der Polymerisation einer Monomerenmischung stammt, enthaltend:

a) mindestens ein α,β-ungesättigtes monoolefinisches Carbonsäuremonomer;
b) mindestens einen (Meth-)Acrylsäureester eines primären oder sekundären Alkohols mit 1 bis 18 Kohlenstoffatomen;
c) 0,01 bis 3 Gew.-%, bezogen auf das Gesamtgewicht der Monomeren, eines Monomers der Formel (1)

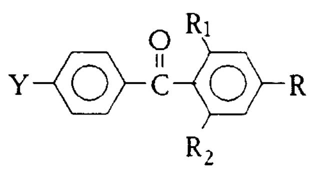

(1)

in der die Reste R, $R_1$ und $R_2$, identisch oder verschieden, ausgewählt sind aus H, $CH_3$, Cl, OH, $NH_2$, COOH und $COOCH_3$ und Y ein organischer Kohlenwasserstoffrest mit einer α,β-ungesättigten olefinischen Bindung ist, der mit den Monomeren a) und b) copolymerisierbar ist und außerdem mindestens ein Heteroatom enthalten kann, ausgewählt aus O, N und S; wobei das Monomer der Formel (1) eine Molmasse unterhalb von 600, vorzugsweise unterhalb von 400, aufweist.

**2.** Bindemittel nach Anspruch 1, dadurch gekennzeichnet, daß das Monomer c) der allgemeinen Formel (2) entspricht

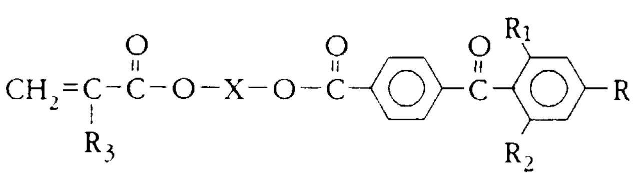

(2)

in der:

- R, $R_1$ und $R_2$ dieselbe Bedeutung wie oben in der Formel (1) besitzen;
- $R_3$ ausgewählt ist aus H und $CH_3$;

- X ein linearer oder verzweigter zweiwertiger Kohlenwasserstoffrest mit 1 bis 6 Kohlenstoffatomen und gegebenenfalls ein Sauerstoffatom ist.

3. Bindemittel nach Anspruch 1 oder 2, dadurch gekennzeichnet, daß das Monomer c) der Formel (3) entspricht

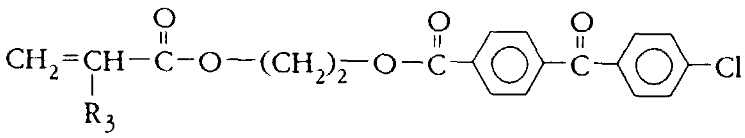 (3)

4. Bindemittel nach einem der vorhergehenden Ansprüche, dadurch gekennzeichnet, daß man 0,5 bis 2 Gew.-%, vorzugsweise 0,1 bis 1 Gew.-%, des Monomers c) verwendet, bezogen auf das Gesamtgewicht der Monomeren.

5. Bindemittel nach einem der Ansprüche 1 bis 4, dadurch gekennzeichnet, daß das Polymer außerdem einen mit Luftsauerstoff oxidierbaren Rest enthält.

6. Bindemittel nach Anspruch 5, dadurch gekennzeichnet, daß der mit Luft oxidierbare Rest durch das Monomer der Formel (4) zugeführt wird.

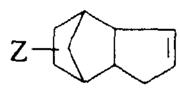 (4)

in der der Rest Z einen organischen Kohlenwasserstoffrest bezeichnet, der eine α,β-ungesättigte olefinische Doppelbindung enthält, die mit den anderen Monomeren copolymerisierbar ist und mindestens ein Heteroatom enthalten kann, das ausgewählt ist aus O, N und S, wobei das Monomer eine Molekularmasse von weniger als 600, vorzugsweise von weniger als 400, aufweist.

7. Bindemittel nach Anspruch 6, dadurch gekennzeichnet, daß das Polymer aus einer Monomerenmischung stammt, die im wesentlichen enthält:

a) 1 bis 6 % mindestens einer Carbonsäure einer α,β-ungesättigten ethylenischen Doppelbindung;
b) 55 bis 95 Gew.-% (Meth-)Acrylsäureester, deren Alkylteile 1 bis 8 Kohlenstoffatome aufweisen;
c) 0,01 bis 3 Gew.-% eines Benzophenonderivats der Formel (2);
d) 0 bis 40 Gew.-% Styrol;
e) 1 bis 10 Gew.-% eines Produktes, das ausgewählt ist aus Dicyclopentadienyloxyethyl(meth)acrylat.

8. Styrol/Acrylat-Farbe oder pastöse Beschichtung, enthaltend Pigmente, pulverförmige Füllstoffe und gewöhnliche Hilfsmittel, dadurch gekennzeichnet, daß sie ein Bindemittel gemäß einem der Ansprüche 1 bis 7 enthält.

## Claims

1. Binder for acrylic or styrene/acrylate paint, more particularly for external paint or semithick flexible coating, characterized in that it is based on a latex of an acrylic or styrene/acrylate polymer which has a glass transition temperature lower than 0°C, produced by the polymerization of a mixture of monomers comprising:

a) at least one alpha,beta-unsaturated monoolefinic carboxylic monomer,
b) at least one (meth)acrylic acid ester of a primary or secondary alcohol containing from 1 to 18 carbon atoms,
c) 0.01 to 3 % by weight, relative to the total weight of the monomers, of a monomer of formula (1):

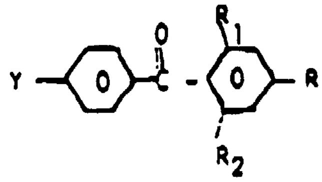

(1)

in which the radicals R, $R_1$ and $R_2$, which are identical or different, are chosen from H, $CH_3$, Cl, OH, $NH_2$, COOH and $COOH_3$ and Y is an organic hydrocarbon radical which has an olefinic alpha,beta unsaturation, copolymerizable with the monomers a) and b) and capable of additionally comprising at least one heteroatom chosen from O, N and 8; the said monomer of formula (1) exhibiting a molecular mass lower than 600, preferably lower than 400.

**2.** Binder according to Claim 1, characterized in that the monomer c) corresponds to the general formula (2):

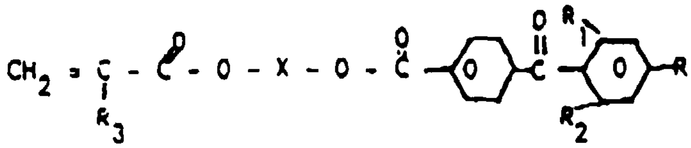

(2)

in which:

- R, $R_1$ and $R_2$ have the same meaning as that given in formula (1),
- $R_3$ is chosen from H and $CH_3$,
- X is a linear or branched divalent hydrocarbon radical containing from 1 to 6 carbon atoms and optionally an oxygen atom.

**3.** Binder according to Claim 1 or 2, characterized in that the monomer c) corresponds to the formula (3):

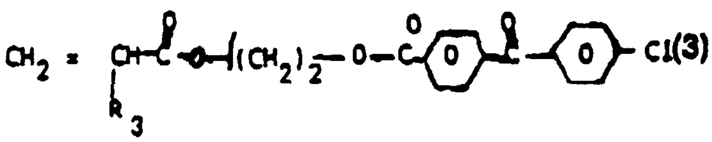

(3)

**4.** Binder according to any one of the preceding claims, characterized in that from 0.5 to 2 %, preferably from 0.1 to 1 % by weight of monomer c), relative to the total weight of the monomers, is employed.

**5.** Binder according to any one of Claims 1 to 4, characterized in that the polymer additionally comprises a radical capable of being oxidized by the oxygen in air.

**6.** Binder according to Claim 5, characterized in that the radical capable of being oxidized in air is contributed by the monomer of formula (4):

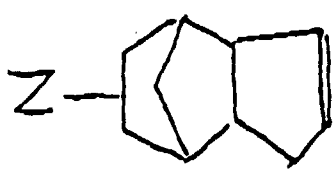

in which the radical Z denotes a hydrocarbon organic radical containing an olefinic alpha,beta unsaturation, capable

of copolymerizing with other monomers and which may contain at least one heteroatom chosen from O, N and S, the said monomer having a molecular mass lower than 600, preferably lower than 400.

**7.** Binder according to Claim 6, characterized in that the polymer originates from a mixture of monomers comprising essentially:

a) from 1 to 6 % of at least one carboxylic acid containing ethylenic alpha,beta unsaturation,
b) from 55 to 95 % by weight of (meth)acrylic acid esters in which the alkyl portion has from 1 to 8 carbon atoms,
c) from 0.01 to 3 % by weight of benzophenone derivative of formula (2),
d) from 0 to 40 % by weight of styrene,
e) from 1 to 10 % by weight of a product chosen from dicyclopentadionylozyethyl (meth)acrylate.

**8.** Styrene/acrylate paint, thick coating comprising pigments, pulverulent fillers and conventional adjuvants, characterized in that it comprises a binder as defined in any one of Claims 1 to 7.